# EUROPÄISCHE PATENTSCHRIFT

(11) **EP 0 662 334 B1**
(45) Veröffentlichungstag und Bekanntmachung des Hinweises auf die Patenterteilung: **26.03.1997**
(21) Anmeldenummer: 94119104.1
(22) Anmeldetag: 03.12.1994
(51) Int. Cl.: B01D 19/04, C08G 77/46

(54) **Verwendung von organofunktionell modifizierten Polysiloxanen zum Entschäumen von Dieselkraftstoff**
Use of organofunctional modified polysiloxanes for defoaming diesel fuel
Utilisation de polysiloxanes modifiés par des organofonctions pour le traitement des anti mousses de gazole

(30) Priorität: 17.12.1993 DE 4343235
(43) Veröffentlichungstag der Anmeldung: 12.07.1995
(73) Patentinhaber: Th. Goldschmidt AG, D-45127 Essen (DE)
(72) Erfinder: Spiegler, Roland, Dr., D-45127 Essen (DE); Keup, Michael, Dr., D-45130 Essen (DE); Kugel, Kerstin, D-40882 Ratingen (DE); Lersch, Peter, Dr., D-46119 Oberhausen (DE); Silber, Stefan.Dr., D-47804 Krefeld (DE)

(56) Entgegenhaltungen:
- EP-A- 0 462 389
- EP-A- 0 499 051
- EP-A- 0 600 261
- WO-A-92/05854
- DE-A- 3 938 109
- FR-A- 2 579 481
- GB-A- 2 248 068
- US-A- 4 028 218

## Beschreibung

Die als Dieselkraftstoff verwendeten Kohlenwasserstoffgemische haben die unangenehme Eigenschaft, beim Abfüllen in Vorratsbehälter, wie Lagertanks und Kraftstoffbehälter von Motorfahrzeugen, in Verbindung mit Luft Schaum zu entwickeln. Dies führt zur Verzögerung des Abfüllvorgangs und zu unzureichender Befüllung der Behälter. Es ist deshalb üblich, dem Dieselkraftstoff Entschäumer zuzusetzen. Diese Entschäumer sollen in möglichst geringer Konzentration wirksam sein und dürfen bei der Verbrennung des Dieselkraftstoffes im Motor keine schädlichen Rückstände bilden oder die Verbrennung des Kraftstoffes negativ beeinflussen. Entsprechend wirksame Entschäumer sind in der Patentliteratur beschrieben.

So betrifft die GB-A-2 173 510 ein Verfahren zum Entschäumen von Dieselkraftstoff oder Jet Fuel, wobei dem Kraftstoff ein Antischaummittel zugesetzt wird, welches im wesentlichen aus einem Organopolysiloxan der allgemeinen Formel 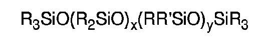
besteht, wobei
das Verhältnis x : y im Bereich 1 : 1 bis 9 : 1 liegt,
jede Gruppe R eine einwertige Kohlenwasserstoffgruppe ist und mindestens 80 % der Gruppen R Methylgruppen sind,
jede Gruppe R' eine substituierte Gruppe der allgemeinen Formel Q(OA)ₙOZ ist, in welcher
Q eine an einem Si-Atom gebundene zweiwertige Gruppe ist,
A eine Alkylengruppe ist und mindestens 80 % dieser Gruppen Ethylengruppen sind,
Z ein Wasserstoffrest oder eine Gruppe OCR" ist, in der R" eine einwertige Gruppe ist,
n einen Wert von 5 bis 25 hat, und
das Copolymer ein durchschnittliches Molekulargewicht der Art hat, daß die OA-Gruppen 25 bis 65 Gew.-% des errechneten Molekulargewichtes des Copolymeren betragen, wobei
das Copolymere in einem organischen Lösungsmittel gelöst sein kann.

Die Einsatzkonzentration des Antischaummittels liegt bei 1 bis 100, vorzugsweise 5 bis 50 ppm, bezogen auf Dieselkraftstoff.

Die DE-A-40 32 006 lehrt ein Verfahren zum Entschäumen und/oder Entgasen organischer Systeme durch Zugabe eines ein Organopolysiloxan enthaltenden Antischaummittels zum organischen System, welches aus Dieselöl oder Rohöl oder Crackprodukten hiervon gebildet sein kann. Als Organopolysiloxan wird ein Polymer verwendet, welches aus Siloxaneinheiten der allgemeinen Formel 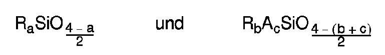 besteht, wobei
R ein einwertiger Kohlenwasserstoffrest mit 1 bis 18 Kohlenstoffatom(en) je Rest bedeutet,
A ein Rest der allgemeinen Formel 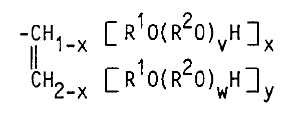 ist, worin
R¹ einen Rest der Formel -CR³H- bedeutet,
   R³ = Wasserstoff- oder einwertiger organischer Rest,
R² einen Rest dar Formel -CR⁴H-CH₃ oder -(CH₂)₃-bedeutet, R⁴ = Wasserstoff- oder einwertiger organischer Rest,
v, w jeweils 0 oder ganze Zahl, wobei v+w durchschnittlich 0 bis 16 ist,
x, y 0 oder 1, wobei x+y 1 oder 2 ist,
a = 1, 2 oder 3,
b = 0, 1 oder 2 und
c = 1 oder 2, wobei die Summe b+c nicht größer als 3 ist.

Die verwendeten Siloxanyl-alkendiyl-bis-w-hydroxy-polyoxyalkylene selbst und ihre Herstellung sind in der DD-B-255 737 beschrieben.

Den beschriebenen und weiteren aus dem Stand der Technik bekannten Antischaummitteln für Dieselkraftstoffe sind verschiedene Nachteile zu eigen. So liegt der Siliciumgehalt typischer Polysiloxan-Polyoxyalkylen-Copolymere bei 10 bis 15 Gew.-%. Bei Organopolysiloxanen mit Alkendiyl-bis-(o-hydroxy-polyoxyalkylenen liegt der Siliciumgehalt sogar bei 20 bis 25 Gew.-%. Da Verbindungen mit solch hohem Siliciumgehalt bei der Verbrennung im Motor zu unerwünschten Siliciumdioxidablagerungen führen können, besteht der Wunsch nach Entschäumern für Dieselkraftstoffe mit verringertem Siliciumanteil oder zumindest verbesserter Schaumverhütung und Schaumbeseitigung, um die Einsatzkonzentration dieser Additive verringern zu können.

Ein weiterer Nachteil der bekannten Antischaummittel besteht in ihrer oft zu geringen Verträglichkeit (Mischbarkeit) mit den Additivpaketen, welche dem rohen Dieselöl zu seiner Eigenschaftsverbesserung zugesetzt werden. Unter Additivpaketen versteht man Mischungen verschiedener Zusatzstoffe, wie z. B. Mittel zur Verbesserung des Verbrennungsverhaltens, Mittel zur Verminderung der Rauchbildung, Mittel zur Verringerung der Bildung schädlicher Abgase, Inhibitoren zur Verringerung der Korrosion im Motor und seinen Teilen, grenzflächenaktive Substanzen, Schmiermittel und dergleichen. Derartige Additivpakete sind z. B. in der JP-A-05 132 682, der GB-A-2 248 068 und in der Zeitschrift Mineralöltechnik, 37(4), 20 pp. beschrieben. Die Zusätze des Additivpaketes sind dabei in einem organischen Lösungsmittel zu einem Stammkonzentrat gelöst, das dem rohen Dieselkraftstoff zugesetzt wird. Antischaummittel mit polaren Gruppen lassen sich in diese Additivpakete häufig nicht gleichmäßig einarbeiten oder separieren bei der Lagerung.

Die vorliegende Erfindung befaßt sich deshalb mit dem technischen Problem, Antischaummittel mit verringertem Siliciumgehalt und/oder verbesserter Wirkung und verbesserter Verträglichkeit mit den überlicherweise verwendeten Additivpaketen aufzufinden.

Diese Eigenschaftskombination ist erfindungsgemäß bei einem ausgewählten organofunktionell modifizierten Polysiloxan zu finden.

Gegenstand vorliegender Erfindung ist deshalb die Verwendung von organofunktionell modifizierten Polysiloxanen der allgemeinen Formel 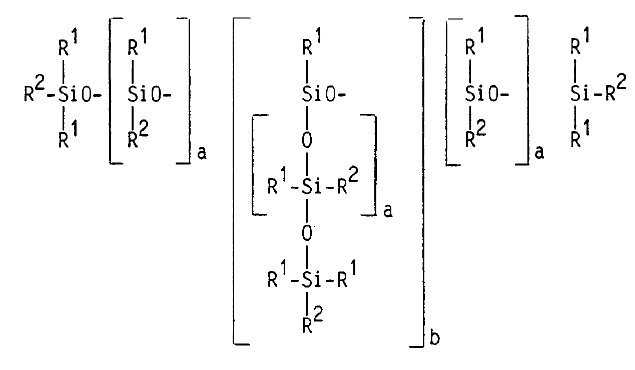 wobei die Reste
R¹ Alkylreste mit 1 bis 4 Kohlenstoffatomen oder Arylreste sind, jedoch mindestens 80 % der Reste R¹ Methylreste sind,
R² im Molekül gleich oder verschieden sind, von denen
30 bis 90 % die Bedeutung des Restes R¹ haben und
70 bis 10 % aus einem Gemisch von Resten R^{2A} und R^{2B} bestehen, wobei die Reste R^{2A} polarer als die Reste R^{2B} sind, und wobei die Reste R^{2A} aus folgenden Resten ausgewählt sind:
   (a) der Rest 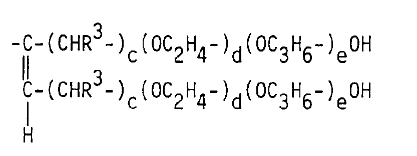 wobei
      R³ ein Wasserstoff- oder Alkylrest,
      c eine Zahl von 1 bis 20,
      d eine Zahl von 0 bis 50,
      e eine Zahl von 0 bis 50 ist oder
   (b) der Rest -(CH₂-)_{f}OR⁴,
      wobei
      R⁴ ein Wasserstoff- oder ein einwertiger organischer Rest, f eine Zahl von 3 bis 20 ist oder
   (c) der Rest -(CH₂-)g(OC₂H₄-)ₕ(OC₃H₆-)_{;}OR⁵
      wobei
      R⁵ ein Wasserstoff- oder ein einwertiger organischer Rest, g eine Zahl von 3 bis 6,
      h eine Zahl von 1 bis 50, i eine Zahl von 0 bis 20 ist und das Verhältnis h : i > 5 : 2 ist, und die Reste R^{2B} aus folgenden Resten ausgewählt sind:
   (d) der Rest 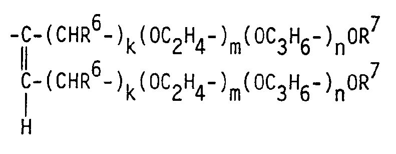 wobei
      _{R}⁶ ein Wasserstoff- oder Alkylrest,
      R⁷ ein Alkyl-, Acyl- oder Trialkylsilylrest,
      k eine Zahl von 1 bis 20,
      m eine Zahl von 0 bis 50,
      n eine Zahl von 0 bis 50 ist oder
   (e) der Rest -(CH₂-)₀CH₃,
      wobei
   o eine Zahl von 5 bis 30 ist, oder
      (f) der Rest -(CH₂-)g(OC₂H₄-)h(OC₃H₆-)ᵢOR⁵ wobei
      R⁵ ein Wasserstoff- oder ein einwertiger organischer Rest,
      g eine Zahl von 3 bis 6,
      h eine Zahl von 0 bis 35,
      i eine Zahl von 1 bis 50 ist und das Verhältnis h : i < 5 : 2 ist,
a eine Zahl von 1 bis 400,
b eine Zahl von 0 bis 10 ist,

### zur Entschäumung von Dieselkraftstoff in Mengen von 0,5 bis 50 ppm, bezogen auf Dieselkraftstoff.

Das Siloxangerüst kann geradkettig (b = 0) oder aber verzweigt sein (> 0 bis 10). Der Wert von b wie auch der Wert von a sind als durchschnittliche Werte im Polymermolekül zu verstehen, da die erfindungsgemäß zu verwendenden Polysiloxane in Form von - im Regelfall - äquilibrierten Gemischen vorliegen.

Die Reste R¹ sind Alkylreste mit 1 bis 4 Kohlenstoffatomen, wie Methyl-, Ethyl-, Propyl- oder Butylreste, oder Arylreste, wobei die Phenylreste bevorzugt sind. Herstellungs- und preisbedingt sind die Methylreste bevorzugt, so daß mindestens 80 % der Reste R¹ Methylreste sein müssen. Besonders bevorzugt sind solche Polysiloxane, bei denen alle Reste R¹ Methylreste sind.

Das Wesen der vorliegenden Erfindung besteht insbesondere darin, daß organofunktionell modifizierte Polysiloxane verwendet werden, welche organofunktionelle Reste R² aufweisen. Diese Reste R² sind aus zwei Hauptgruppen ausgewählt, nämlich aus den Resten R^{2A} und R^{2B.} Diese beiden Reste R^{2A} und R^{2B} unterscheiden sich in ihrem polaren Charakter: Die Reste R^{2A} sind polarer als die gleichzeitig vorhandenen Reste R^{2B}. Durch diese Wahl der Reste R^{2A} und R^{2B} gelingt es, die Verträglichkeit der erfindungsgemäß zu verwendenden Polysiloxane der Formel mit dem Dieselkraftstoff zu optimieren und gleichzeitig bei optimaler Verträglichkeit optimale entschäumende Wirkung zu erreichen.

Das Verhältnis der polaren Reste R^{2A} zu den weniger polaren Resten R^{2B} kann in weiten Grenzen schwanken. Es hat sich bewährt, ein Verhältnis von 10 : 1 bis 1 : 3 einzustellen. Besonders bevorzugt ist ein Verhältnis von 6 : 1 bis 2 : 1.

Es müssen jedoch nicht alle Reste R² aus den Resten R^{2A} und R^{2B} ausgewählt sein. Ein Teil dieser Reste kann auch die Bedeutung der Reste R¹ haben, d.h. ein Teil der Reste R² kann auch die Bedeutung von Alkylresten mit 1 bis 4 Kohlenstoffatomen oder von Arylresten haben. Auch in diesem Falle sollen die Reste vorzugsweise Methylreste sein.

R² kann somit im Molekül gleich oder verschieden sein und ist wie folgt zu definieren:
30 bis 90 % aller Reste R² können die Bedeutung des Restes R¹ haben, jedoch müssen
70 bis 10 % der Reste R² aus einem Gemisch von Resten R^{2A} und R^{2B} bestehen.

Im folgenden sollen zunächst die möglichen polaren Reste R^{2A} näher beschrieben werden. Hier stehen die folgenden Reste zur Auswahl:
Der Rest (a):

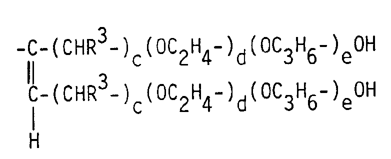

Im Rest (a) ist R³ ein Wasserstoff- oder Alkylrest, insbesondere ein niederer Alkylrest mit 1 bis 4 Kohlenstoffatomen. Bevorzugt ist der Wasserstoffrest. Der Index c ist eine Zahl von 1 bis 20, vorzugsweise 1. Die Indices d und e sind unabhängig voneinander Zahlen von 0 bis 50. Bevorzugt ist ein Rest (a), bei dem R³ ein Wasserstoffrest ist, der Index c gleich 1 und die Indices d und e unabhängig voneinander jeweils 0 bis 10 sind. Bei diesen Indices handelt es sich um durchschnittliche Zahlen, da es bekannt ist, daß bei der Anlagerung von Alkylenoxiden, wie Ethylenoxid und Propylenoxid, an Alkohole ein Gemisch von Verbindungen unterschiedlicher Kettenlänge erhalten wird.

Diese Reste (a) können in das Molekül des Polysiloxans durch Addition von Alkendiyl-bis-w-hydroxy-polyoxyalkylenen an SiH-Gruppen des Polysiloxans in Anwesenheit eines Hydrosilylierungskatalysators entsprechend dem Verfahren der DD-PS 255 737 eingeführt werden.

Der Rest (b):

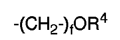

Im Rest (b) ist R⁴ ein Wasserstoff- oder ein einwertiger organischer Rest. Als einwertige organische Reste kommen die üblichen endblocberenden Gruppen, insbesondere niedere Alkylreste mit 1 bis 4 C-Atomen, in Frage. Der Index f ist eine Zahl von 3 bis 20, wobei der Zahlenwert von 6 bevorzugt ist.

Diese Reste (b) können mittels einer wie oben bereits beschriebenen Hydrosilylierungsreaktion durch Addition von Alkenolen oder ihrer Derivate an SiH-Gruppen des Organopolysiloxans eingeführt werden. Beispiele für ein solches Alkenol und dessen endblockiertes Derivat sind Hexenol bzw. der Alkylether des Hexenols.

Der Rest (c):

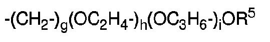

Im Rest (c) ist R⁵ ein Wasserstoff- oder ein einwertiger organischer Rest. Vorzugsweise ist R⁵ ein Wasserstoff-oder Methylrest. Der Index g ist eine Zahl von 3 bis 6, der Index h eine Zahl von 1 bis 50 und der Index i eine Zahl von 0 bis 20, wobei das Zahlenverhältnis h : i > 5 : 2 ist. Vorzugsweise hat der Index g einen Wert von 3, der Index h einen Wert von 8 bis 30 und der Index i einen Wert von 0 bis 12.

Auch die Reste (c) können mittels einer wie oben bereits beschriebenen Hydrosilylierungsreaktion durch Addition von Alkenolpolyethern oder ihrer Derivate an SiH-Gruppen des Organopolysiloxans eingeführt werden.

Es folgt nun die Beschreibung der Reste R^{2B}, deren Polarität geringer als die der Reste R^{2A} ist. Hier stehen die folgenden Reste zur Auswahl:

Der Rest (d):

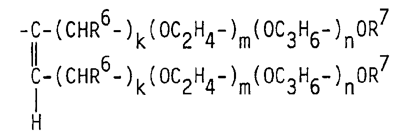

Der Rest (d) kann mit dem Rest (a) (innerhalb der Möglichkeiten des Restes R^{2A}) verglichen werden und unterscheidet sich von diesem durch die Blockierung der endständigen Hydroxylgruppen. Die endblokberende Gruppe R⁷ ist eine Alkyl-, Acyl- oder Trialkylsilylgruppe. Bevorzugt ist der Methyl-, Acetyl- oder Trimethylsilylrest. Durch diese Modifizierung wird die Verträglichkeit des Antischaummittels im Additivpaket wesentlich verbessert. Bezüglich ihrer Definition entsprechen sich der Rest R³ und der Rest R⁶, die Indices c, d und e den Indices k, m und n. Gleiches gilt für die bevorzugten Bedeutungen.

Der Rest (e):

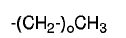

In dem Rest (e) hat der Index o einen Zahlenwert von 5 bis 30, vorzugsweise 11 bis 17. Es handelt sich hier also um langkettige Alkylreste. Diese Reste verbessern die Verträglichkeit des erfindungsgemäß zu verwendenden Siloxans im Additivpaket, aber auch im Dieselkraftstoff wesentlich.

Diese Reste können durch hydrosilylierende Additon von a-Olefinen an SiH-Gruppen des Organopolysiloxans erhalten werden.

Der Rest (f):

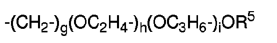

Der Rest (f) kann mit dem Rest (c) (innerhalb der Möglichkeiten des Restes R^{2A}) verglichen werden und unterscheidet sich von diesem durch die Anzahl der verschiedenen Oxyalkyleneinheiten: Der Index h ist eine Zahl von 0 bis 35, der Index i eine Zahl von 1 bis 50, wobei das Verhältnis der Indices h : i < 5 : 2 ist. Vorzugsweise hat h einen Zahlenwert von 0 bis 17 und i einen Zahlenwert von 6 bis 26. g ist eine Zahl von 3 bis 6, vorzugsweise 3.

Auch die Reste (f) können mittels einer wie oben bereits beschriebenen Hydrosilylierungsreaktion durch Addition von Alkenolpolyethern oder ihrer Derivate an SiH-Gruppen des Organopolysiloxans eingeführt werden.

Die erfindungsgemäß zu verwendenden organofunktionell modifizierten Polysiloxane können dem Dieselkraftstoff direkt zugesetzt werden, wobei ein Zusatz von 0,5 bis 50 ppm, bezogen auf Dieselkraftstoff, für eine wirksame Entschäumung ausreicht. Bevorzugt beträgt der Zusatz 2 bis 20 ppm. Durch diese niedrige Zusatzmenge bedingt resultiert ein niedriger absoluter Si-Gehalt im Dieselkraftstoff.

Es ist jedoch auch möglich und stellt das in der Praxis bevorzugte Verfahren dar, das erfindungsgemäß zu verwendende Polysiloxan dem sogenannten Additivpaket, welches eingangs beschrieben worden ist, zuzusetzen.

Um die Verträglichkeit des erfindungsgemäß zu verwendenden organofunktionell modifizierten Polysiloxans mit insbesondere dem Additivpaket zu verbessern, kann es von Vorteil sein, das erfindungsgemäß zu verwendende Organopolysiloxan der Formel in einer Mischung mit einem Polyether einzusetzen.

Die Mischung kann bis zu 90 Gew.-% eines Polyethers der allgemeinen Formel II 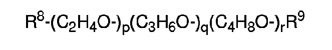 wobei
R⁸ ein Hydroxyl- oder Alkoxyrest ist,
R⁹ ein Wasserstoff-, Alkyl- oder Alkenylrest ist,
p, q und r jeweils eine Zahl von 0 bis 100 ist,

### deren Summe 1 bis 200 ist,

### enthalten.

Der Polyether der Formel II soll mit dem Polysiloxan und dem Additivpaket verträglich sein. Er soll in dem zu entschäumenden Dieselkraftstoff gut dispergierbar sein. Die optimale Zusammensetzung des Polyethers innerhalb des angegebenen Bereiches und das optimale Mischungsverhältnis können jeweils in einfacher Weise durch Vorversuche ermittelt werden. Bevorzugt ist ein Mischungsverhältnis Polysiloxan : Polyether wie 1 : 9 bis 2 : 3.

Der Rest R⁸ des Polyethers ist ein Hydroxy- oder Alkyloxyrest, vorzugsweise ein Hydroxyrest. Der Rest R⁹ des Polyethers ist ein Wasserstoff-, Alkyl- oder Alkenylrest, vorzugsweise ein Alkylrest. Die Indices p, q und r haben durchschnittliche Werte von jeweils 0 bis 100, die Summe p + q + r beträgt 1 bis 200.

Zusätzlich kann die Verteilung des Gemisches aus erfindungsgemäß zu verwendendem Polysiloxan der Formel I mit dem Polyether der Formel II durch Zusatz eines Emulgators begünstigt werden, der einen HLB-Wert > 5 aufweisen soll. Dabei können bis zu 30 % des Polyethers der allgemeinen Formel II durch diesen Emulgator ersetzt werden, so daß ein typisches Beispiel für einen Entschäumer, der sowohl Polyether wie Alkohol enthält, wie folgt zusammengesetzt sein kann:
10 Gew.-% des organofunktionell modifizierten Polysiloxans der Formel I,
63 Gew.-% des Polyethers der Formel II und
27 Gew.-% Emulgator.

Eine bevorzugte Abmischung des organofunktionell modifizierten Polysiloxans der Formel I mit dem Polyether der Formel II und einem Emulgator besteht aus
10 bis 40 Gew.-% des organofunktionell modifizierten Polysiloxans der Formel l,
50 bis 89 Gew.-% des Polyethers der Formel II und
1 bis 10 Gew.-% Emulgator.

Beispiele geeigneter Emulgatoren sind Polyoxyalkylenether von Fettalkoholen oder ethoxylierte Nonylphenole. Weitere geeignete Emulgatoren sind Umesterungsprodukte von Polyacrylaten mit einem Gemisch von Polyethermonoolen und Alkanolen bzw. Alkenolen. Derartige Umesterungsprodukte von Polyacrylaten mit Alkoholen sind z.B. der DE-PS 39 06 702 zu entnehmen.

In den folgenden Beispielen wird zunächst die Herstellung von erfindungsgemäß zu verwendenden organofunktionell modifizierten Organopolysiloxanen der Formel I gezeigt. Die in diesen Beispielen hergestellten Produkte werden mit T1 bis T9 bezeichnet.

### Beispiel 1

### Herstellung des Entschäumers T1

150,1 g (0,82 mol) ethoxyliertes 2-Butin-1,4-diol werden mit 4 mg (= 20 ppm Pt) Hexachloroplatinsäure H₂PtC1₆ und 100 ml Toluol in einem 500-ml-Vierhalskolben, ausgestattet mit Rührer, Tropftrichter, Thermometer und Rückflußkühler, vorgelegt und unter Rühren auf 110°C aufgeheizt. Bei dieser Temperatur werden 212,7 g (0,1 mol) eines seitenständig SiH-funktionalisierten Polydimethylsiloxans der allgemeinen Formel 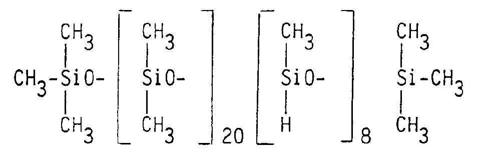 derart zugetropft, daß trotz einsetzender exothermer Reaktion eine Temperatur von 130°C nicht überschritten wird. Nach beendeter Zugabe wird die Reaktionsmischung noch 1 bis 2 h weiter bei 130°C gerührt, bis die Umsatzkontrolle über den SiH-Wert zeigt, daß das ethoxylierte 2-Butin-1,4-diol vollständig hydrosilylierend angelagert worden ist. Bei einem Umsatz von > 99 % wird die Reaktion abgebrochen und die Katalysatorreste aus der Reaktionsmischung durch Filtration abgetrennt. Durch nachfolgende Destillation im Ölpumpenvakuum werden das Lösungsmittel sowie flüchtige Nebenprodukte entfernt.

Analytische Untersuchungen mittels 1H-, '³C- und ²⁹Si-NMR bestätigen die erwartete Struktur und zeigen, daß das Additionsprodukt der Ausgangskomponenten durch die nachfolgende Formel (entsprechend den

spektroskopischen Daten) beschrieben werden kann:

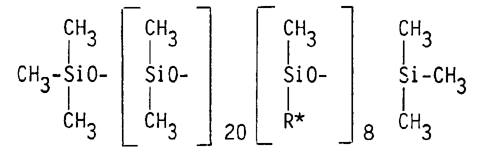

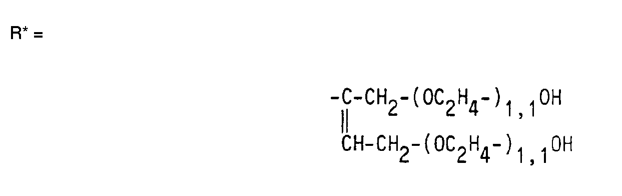

185 g (0,05 mol) des so hergestellten hydroxyalkylfunktionellen Siloxans werden unter Zugabe von 0,2 g Schwefelsäure (98 %ig) als saurem Katalysator auf 60°C aufgeheizt. Bei dieser Temperatur werden 17,2 g (0,2 mol) Essigsäureanhydrid zugetropft und die Reaktionstemperatur auf 70°C erhöht. Bei dieser Temperatur wird das Reaktionssystem 2 h gerührt und anschließend durch Zugabe von 4,0 g Natriumcarbonat neutralisiert. Danach wird bei 120°C im Ölvakuum destilliert, um flüchtige Nebenprodukte zu entfernen, und daran anschließend das Produkt heiß filtriert. Nach den Analysenergebnissen entspricht das teilacetylierte Reaktionsprodukt der zu erwartenden Zusammensetzung und kann als ein Siloxan der folgenden mittleren Formel beschrieben werden:

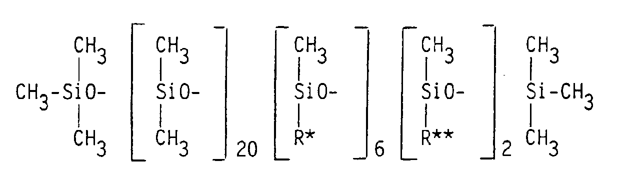

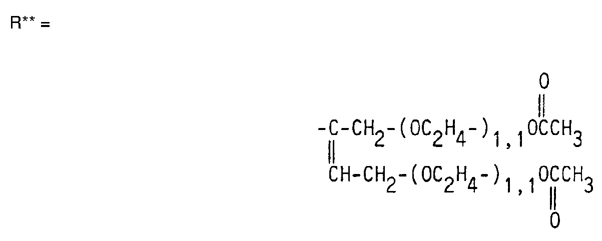

Das Verfahrensprodukt weist eine Viskosität von 3975 mPas (20°C) auf.

### Beispiel 2

### Herstellung des Entschäumers T2

Eine Mischung aus 111,6 g (0,61 mol) ethoxyliertem 2-Butin-1,4-diol und 135,1 g (0,25 mol) eines Polyoxyalkylenpolymeren der mittleren Durchschnittsformel CH₂=CH-CH₂(O-C₂H₄-)₇(O-C₃H₆-)₃OH, 2,5 g Natriumcarbonat und 6 mg Hexachloroplatinsäure H₂PtC1₆ werden in einem 800-ml-Vierhalskolben, ausgestattet mit Rührer, Tropftrichter, Thermometer und Rückflußkkühler, vorgelegt und unter Rühren auf 110°C aufgeheizt. Bei dieser Temperatur werden 212,7 g (0,1 mol) eines seitenständig SiH-funktionalisierten Polydimethylsiloxans der allgemeinen Formel 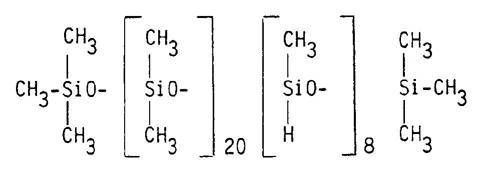 innerhalb von 45 min so zugetropft, daß trotz exothermer Reaktion die Temperatur nicht über 120°C steigt. Nach beendeter Zugabe wird die Reaktionsmischung noch solange weiter bei 125°C gerührt, bis ein SiH-Umsatz von > 99 % erreicht ist.

Nach erfolgter Destillation am Rotationsverdampfer, um flüchtige Nebenprodukte zu entfernen, wird nach dem Abkühlen in 95 %iger Ausbeute ein klares, gelbes, niedrigviskoses (2800 mPas, 20°C) Reaktionsprodukt erhalten, das entsprechend den spektroskopischen Daten der erwarteten Struktur entspricht: 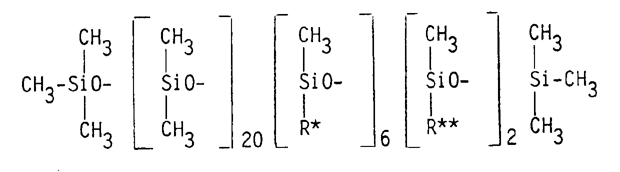
R^{*} = wie in Beispiel 1
R** _ = -(CH₂-)₃(OC₂H₄-)₇(OC₃H₆-)₃OH
   Beispiel 3
Herstellung des Entschäumers T3

In einem 500-ml-Vierhalskolben, ausgestattet mit Rührer, Tropftrichter, Thermometer und Rückflußkühler, werden 172,0 g (0,94 mol) ethoxyliertes 2-Butin-1,4-diol, 4 mg (= 20 ppm Pt) Hexachloroplatinsäure H₂PtCI₆, 2 g Natriumcarbonat sowie 30 ml Toluol miteinander vorgelegt und unter Rühren auf 110°C aufgeheizt. Dazu wird eine Mischung aus 209,8 g (0,1 mol) eines end- und seitenständig SiH-funktionellen Polydimethylsiloxans der mittleren Formel 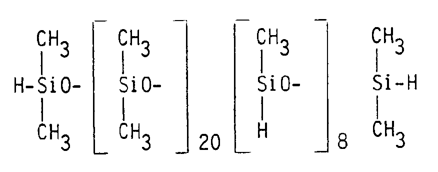 und 22,4 g (0,11 mol) 1-Hexadecen derart zugetropft, daß eine Temperatur von 125°C nicht überschritten wird. Nach dem Abklingen der Reaktionsexothermie wird die Temperatur auf 130°C erhöht und der Ansatz solange bei dieser Temperatur gehalten, bis ein SiH-Umsatz > 99 % erreicht wird. Die Aufarbeitung erfolgt durch Filtration und daran anschließender Destillation am Rotationsverdampfer. Die NMR-spektroskopische Analyse des gelben Reaktionsproduktes zeigt, daß ein Polydimethylsiloxan der folgenden mittleren Zusammensetzung erhalten wird 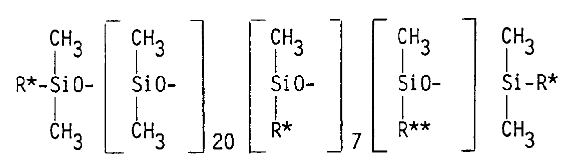
R^{*} = wie in Beispiel 1
R^{** -} = -(CH₂-)₁₅CH₃

Das Verfahrensprodukt weist eine Viskosität von 3225 mPas (20°C) auf.

### Beispiel 4

### Herstellung des Entschäumers T4

Eine Mischung aus 112,5 g (1,12 mol) 5-Hexen-1 -ol, 70,2 g (0,13 mol) eines Polyoxyalkylenpolymeren der mittleren Durchschnittsformel CH₂=CH-CH₂(O-C₂H₄-)₇(O-C₃H₆-)₃OH, 2 g Natriumcarbonat und 4 mg Hexachloroplatinsäure H₂PtCl₆ wird unter Rühren auf 110°C aufgeheizt. Bei dieser Temperatur werden 135,7 g (0,1 mol) eines seitenständig SiH-funktionalisierten Polydimethylsiloxans der allgemeinen Formel 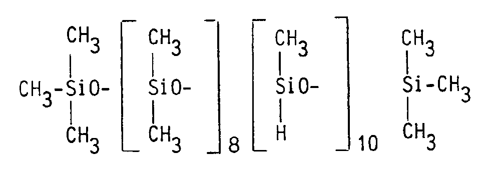 innerhalb von 30 min so zugetropft, daß trotz exothermer Reaktion die Temperatur nicht über 120°C steigt. Danach wird weiter solange bei 125°C gerührt, bis ein SiH-Umsatz von > 99 % erreicht ist.

Daran anschließend wird das Endprodukt filtriert und destilliert, um den Alkoholüberschuß sowie flüchtige Nebenprodukte abzutrennen. Es werden 300 g (entsprechend 98 % der Theorie) eines gelben Reaktionsproduktes mit einer Viskosität von 2600 mPas (20°C) erhalten, das entsprechend den spektroskopischen Daten durch die folgende allgemeine Formel beschrieben werden kann 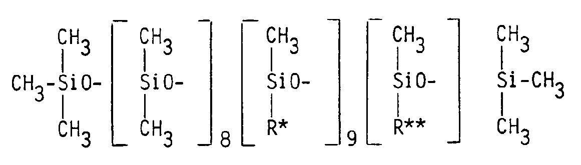
R* = -(CH₂-)gOH
R** = wie in Beispiel 2

### Beispiel 5

### Herstellung des Entschäumers T5

134 g (0,1 mol) des seitenständig SiH-funktionalisierten Polydimethylsiloxans der mittleren Gesamtkettenlänge N = 20 aus Beispiel 4 werden mit 1,6 mg (= 5 ppm Pt) Hexachloroplatinsäure H₂PtCₗ₆ bei Raumtemperatur in einem 500- ml-Vierhalskolben vorgelegt. Danach wird die Mischung unter Rühren auf 110°C aufgeheizt. Bei dieser Temperatur werden zügig 44,8 g (0,2 mol) 1-Hexadecen zugetropft und weitergerührt. Nach Erreichen des theoretisch möglichen SiH-Umsatzes von 20 % wird das partiell hexadecylfunktionelle SiH-Siloxancopolymer, welches die mittlere Zusammensetzung 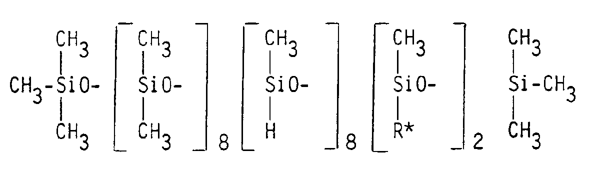
R^{*} = -(CH₂-)₁₅CH₃

### aufweist, auf Raumtemperatur abgekühlt.

In einer zweiten Reaktionsstufe werden 104,1 g 5-Hexen-1-ol (1,04 mol), 1,4 g Natriumcarbonat und 2,6 mg H₂PtC1₆ zusammen vorgelegt und unter Rühren auf 120°C aufgeheizt. Bei dieser Temperatur werden 174 g (0,1 mol) des partiell hexadecylfunktionellen SiH-Siloxans aus der ersten Reaktionsstufe innerhalb von 30 min zugetropft und bis zum Erreichen eines Umsatzes > 99 % weitergerührt. Dann wird das Endprodukt filtriert und daran anschließend destilliert, um den Alkoholüberschuß und flüchtige Nebenprodukte abzutrennen. Es werden 250 g (entsprechend 98 % der Theorie) eines gelben Reaktionsproduktes mit einer Viskosität von 4200 mPas (20°C) erhalten, das entsprechend den spektroskopischen Daten durch die nachfolgende allgemeine Formel beschrieben werden kann 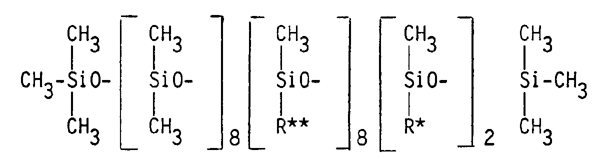
R^{**} = -(CH₂-)₆0H

### Beispiel 6

### Herstellung des Entschäumers T6

Analog wie in Beispiel 5 beschrieben, wird unter Verwendung des gleichen SiH-Siloxans durch Variation der bei der Derivatisierung eingesetzten Menge an 1-Hexadecen ein teilweise hexadecylfunktionelles SiH-Siloxan der mittleren Zusammensetzung 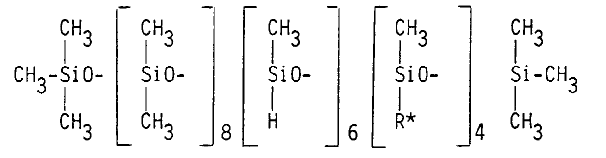
R^{*} = wie in Beispiel 5

hergestellt. Daran anschließend werden die restlichen SiH-Gruppen des Materials in analoger Weise in einer zweiten Reaktionsstufe mit 5-Hexen-l-ol umgesetzt. Nach der Aufarbeitung durch Filtration und Destillation wird ein gelbes Reaktionsprodukt mit einer Viskosität von 1325 mPas (20°C) erhalten, das entsprechend den spektroskopischen Daten der folgenden allgemeinen Formel entspricht 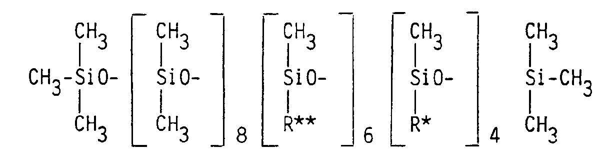
R** = wie in Beispiel 5

### Beispiel 7

### Herstellung des Entschäumers T7

In analoger Weise wie in Beispiel 5 beschrieben, werden zunächst 124,9 g (0,044 mol) eines seitenständig SiH-funktionalisierten Polydimethylsiloxans der allgemeinen Formel 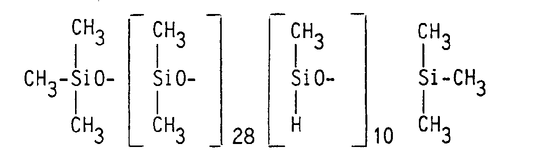 mit 19,7 g (0,088 mol) 1-Hexadecen unter Verwendung von 4,5 mg Hexachloroplatinsäure als Katalysator miteinander in einer Hydrosilylierungsreaktion zu einem SiH-haltigen Siloxancopolymeren der mittleren Formel

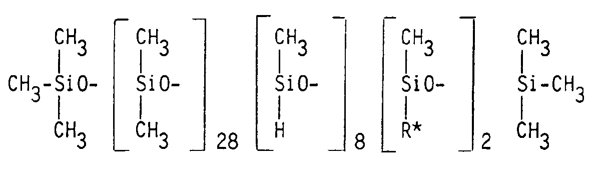

### R^{*} = wie in Beispiel 5

umgesetzt. In einer zweiten Reaktionsstufe werden 52,5 g (0,016 mol) des partiell hexadecylfunktionellen SiH-Siloxans bei einer Temperatur von 110°C unter Rühren zu einer Mischung aus 25 g Toluol, 64,4 g (0,16 mol) eines Polyoxyalkylenpolymeren der mittleren Durchschnittsformel CH₂=CH-CH₂(O-C₂H₄-)₉OH und 1 g Natriumcarbonat derart zugetropft, daß die Temperatur 120°C nicht übersteigt. Nach dem Zutropfen wird bei dieser Temperatur solange weitergerührt, bis die Umsatzkontrolle über den SiH-Wert zeigt, daß ein Umsatz > 99 % erreicht worden ist.

Nach Filtration und destillativer Entfernung von Lösungsmittel und flüchtigen Nebenprodukten werden 112 g (entsprechend 95 % der Theorie) eines klaren, gelben Reaktionsproduktes mit einer Viskosität von 950 mPas (20°C) erhalten, das entsprechend den spektroskopischen Daten durch die folgende Formel beschrieben werden kann 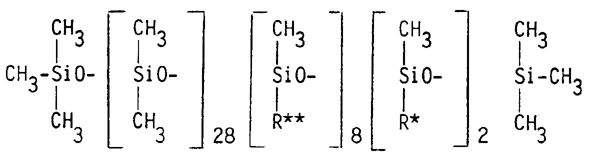
R** - = -(CH₂-)₃(OC₂H₄-)g0H

### Beispiel 8

### Herstellung des Entschäumers T8

55 g (0,017 mol) des partiell hexadecylfunktionellen SiH-Siloxans aus Beispiel 7 werden in beschriebener Weise mit 100 g (0,167 mol) eines Allylpolyethers in einer Hydrosilylierungsreaktion miteinander umgesetzt. Nach der vollständigen Absättigung der restlichen SiH-Gruppen durch Polyetherfunktionen wird nach der Aufarbeitung durch Filtration und Destillation ein gelbes Reaktionsprodukt mit einer Viskosität von 2100 mPas (20°C) erhalten, dem entsprechend den spektroskopischen Daten die allgemeine Formel 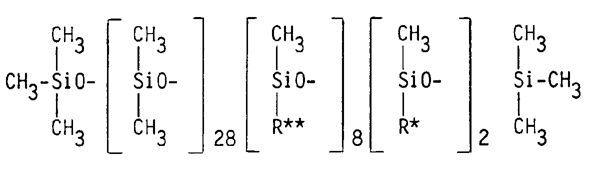
R^{*} = wie in Beispiel 5
R** = -(CH₂-)3(OC₂H₄-)₁₃OH
zugeordnet werden kann.

### Beispiel 9

### Herstellung des Entschäumers T9

Analog wie in Beispiel 7 beschrieben, wird unter Verwendung des gleichen SiH-Siloxans durch Variation der bei der Derivatisierung eingesetzten Menge an 1-Hexadecen ein partiell hexadecylfunktionelles SiH-Siloxan der mittleren Zusammensetzung 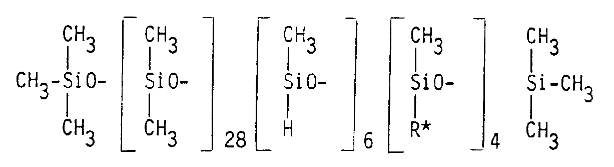
R^{*} = wie in Beispiel 5

hergestellt. Daran anschließend werden die restlichen SiH-Gruppen des Materials in analoger Weise in einer zweiten Reaktionsstufe mit einem Allylpolyether (MW 600, EO-Homopolymer) umgesetzt. Nach der Aufarbeitung durch Filtration und Destillation wird ein gelbes Reaktionsprodukt mit einer Viskosität von 4125 mPas (20°C) erhalten, das entsprechend den spektroskopischen Daten der folgenden allgemeinen Formel entspricht 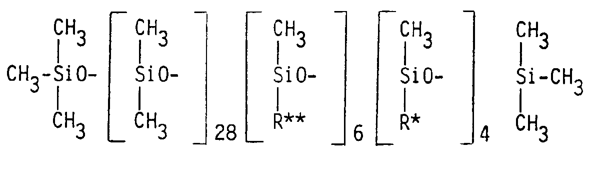
R** = wie in Beispiel 8

Im Falle der zusätzlichen Verwendung von Polyethern haben diese folgende Zusammensetzung und Bezeichnung

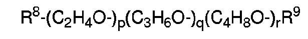

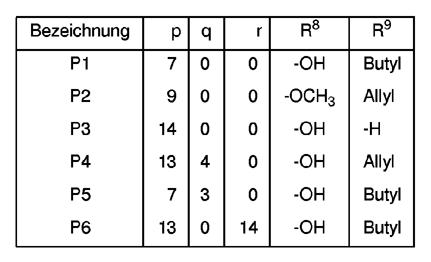

Im Falle der Mitverwendung von Emulgatoren werden die folgenden Verbindungstypen verwendet:
Typ A: CH₃-(CH₂-)ₙ(OC₂H₄-)ₘOH
Typ B: C₉H₁₉-C₆H₄O-(C₂H₄O-)ₙH
Typ C: X-(CH₂-CH(COOCH₃)-)ₙ-(CH₂-CH(COOR^{a})-)ₘ-(CH₂-CH(COOR^{b})-)ₒY

Dabei bedeuten X und Y übliche Endgruppen von Polyacrylaten, die herstellungsbedingt sind. R^{a} bedeutet einen Polyetherrest und R^{b} einen Oleylrest.

Die Bezeichnung und die Werte für die Indices ergeben sich aus der folgenden Tabelle:

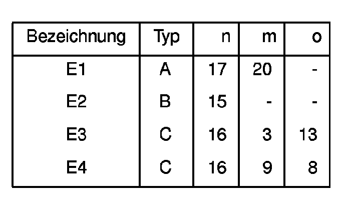

Im Falle der Abmischung erfindungsgemäß zu verwendender organofunktionell modifizierter Organopolysiloxane mit Polyethern und gegebenenfalls Emulgatoren werden folgende Entschäumerformulierungen eingesetzt:

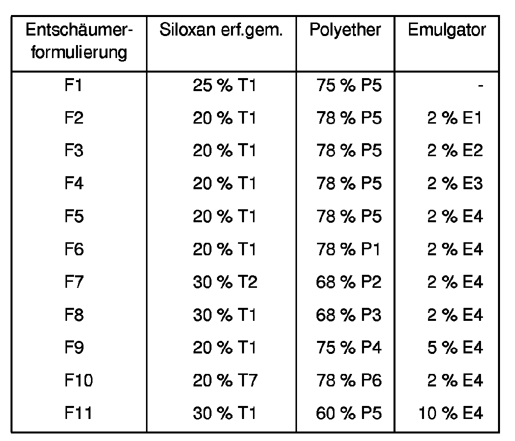

Die anwendungstechnischen Vergleichsversuche werden mit Produkten des Standes der Technik, den Verbindungen T1 bis T9 und den Zubereitungen F1 bis F11 durchgeführt. Als Vergleichssubstanzen dienen der Entschäumer A (entsprechend GB-PS 2 173 510) und der Entschäumer B (entsprechend der DE-OS 40 32 006): 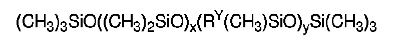
Entschäumer A:
   R^{Y}= -(CH2-)3(OC₂H₄-)₁₄OH
   x= = 13
   y 3
Entschäumer B:
   R^{Y} = 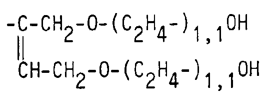
   X= 20
   y 6

Zur Prüfung des Entschäumungsvermögens der erfindungsgemäß zu verwendenden Siloxane oder der diese enthaltenden Zubereitungen werden die Siloxane oder die Zubereitungen in einem Additivpaket des Standes der Technik gelöst und eine bestimmte Menge dieser Mischung in 1500 g additivfreien Dieselkraftstoff eingerührt. Das Mischungsverhältnis des Siloxans oder seiner Zubereitung zum Additivpaket und die zum Kraftstoff gegebene Menge von diesem Additiv werden so gewählt, daß die gewünschte Siloxankonzentration und gleichzeitig eine Konzentration des Additivpaketes von 200 ppm im Dieselkraftstoff erzielt werden. Die Konzentration der erfindungsgemäßen Verbindungen im Dieselkraftstoff wird zwischen 2 und 20 ppm variiert. Es wird für jedes Produkt bzw. für jede Formulierung die ungefähre kritische Konzentration bestimmt, bei deren Unterschreitung erstmals ein deutlicher Wirkungsabfall eintritt.

Der Schaumzerfall des mit Additiv und Entschäumer versetzten Dieselkraftstoffes wird in einer Druckapparatur getestet. Diese Apparatur besteht im wesentlichen aus einem 1-Liter-Druckgefäß, das mit einem konstanten Preßluftdruck beaufschlagt werden kann und einem 1-Liter-Meßzylinder. Ein mit einem Magnetventil versehener Auslaßstutzen des Druckgefäßes befindet sich dabei zentriert über dem Meßzylinder und taucht in diesen nur wenige Zentimeter ein. Es werden bei jedem Test 350 g des zu prüfenden Dieselkraftstoffs in das Druckgefäß eingefüllt, mit einem Preßluftdruck von 2 bar beaufschlagt und mit Hilfe des Magnetventils über einen Zeitraum von 3 Sekunden in den Meßzylinder abgelassen. Die Volumendifferenz, die sich aus dem maximalen Schaumpegel und dem Pegel der schaumfreien Flüssigkeit im Meßzylinder ergibt, wird in ml angegeben und als Schaumvolumen bezeichnet. Die Zeit, die zwischen dem Erreichen des maximalen Schaumpegels und dem Aufreißen der Schaumschicht über der Flüssigkeit zu einem Schaumkranz verstreicht, wird in Sekunden gemessen und als Schaumzerfallszeit bezeichnet. Es werden für jede Entschäumerformulierung drei Messungen durchgeführt und der Mittelwert von Schaumhöhe und -zerfallszeit bestimmt.

Zur Untersuchung der Verträglichkeit mit Entschäumerformulierungen werden drei verschiedene, dem Stand der Technik entsprechende Additivpakete verwendet. Es wird jeweils 1 g des erfindungsgemäß zu verwendenden Siloxans oder der Zubereitung, welche das Siloxan enthält, zu 19 g eines Additivpaketes gegeben und gerührt. Der Entschäumer wird als mit dem Additivpaket verträglich bezeichnet, wenn innerhalb von einer Woche bei Raumtemperatur keine Trübung oder Ausbildung einer zweiten Phase im Additivpaket festzustellen ist. Das Ergebnis der Verträglichkeitsprüfung wird als positiv bewertet und mit einem "+" gekennzeichnet, wenn die untersuchte Formulierung mit allen drei getesteten Additivpaketen verträglich ist, sonst als negativ und mit "-" gekennzeichnet.

Die folgende Tabelle stellt die Meßergebnisse des Schaumzerfallstests und der Verträglichkeitsprüfung zusammen. Die angegebenen Einsatzkonzentrationen sind, wie oben beschrieben, die für jede Entschäumerformulierung kritische Einsatzkonzentration, deren Unterschreitung zu einer deutlichen Verschlechterung des Entschäumungsverhaltens führt. Der Siliciumgehalt des mit Entschäumer versetzten Dieselkraftstoffs wird aus der Einsatzkonzentration des Entschäumers, dem Anteil an organomodifiziertem Polysiloxan in der Formulierung und dessen theoretischem Siliciumgehalt, der anhand der durchschnittlichen Strukturformel bestimmt wird, berechnet.

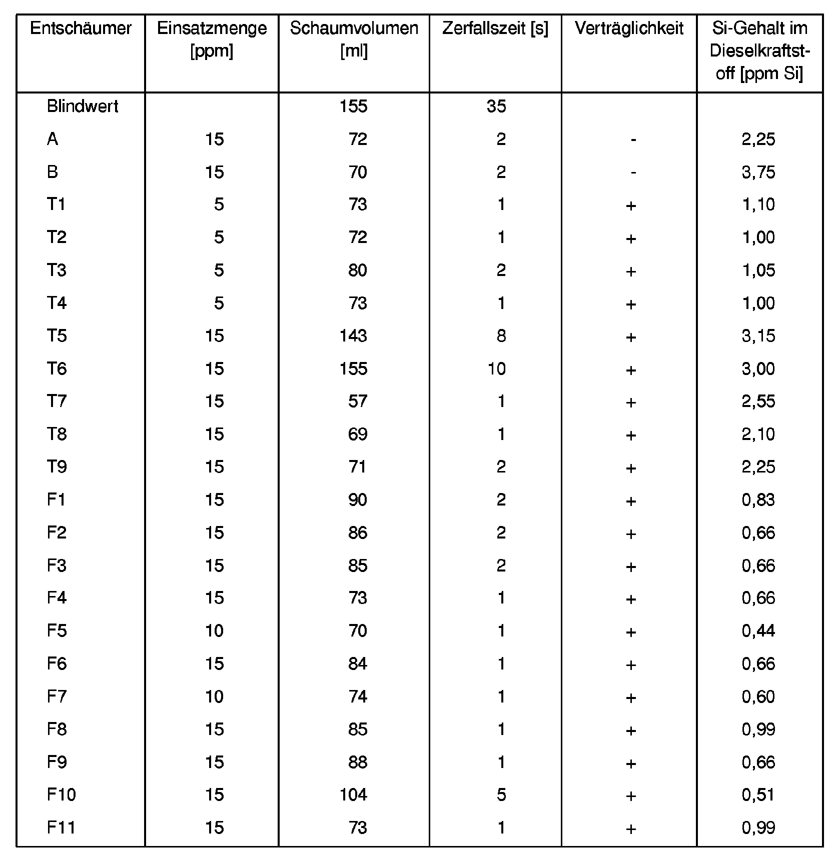

Die Zusammenstellung zeigt, daß die erfindungsgemäß zu verwendenden organofunktionell modifizierten Polysiloxane T1 bis T9 und die diese enthaltenden Formulierungen F1 bis F11 sehr gut zur Entschäumung von Dieselkraftstoff geeignet sind. Im Gegensatz zu den Vergleichsprodukten lassen sich dabei Si-Gehalte im Diesel von deutlich unter 1 ppm, teilweise sogar unter 0,5 ppm, erzielen. Die Bildung von Siliciumdioxid bei der Verbrennung im Motor läßt sich damit auf etwa ein Fünftel des Wertes, welcher dem Stand der Technik entspeicht, reduzieren. Ein weiterer Vorteil der erfindungsgemäßen Entschäumer ist die gute Verträglichkeit mit Kraftstoff-Additivpaketen. Der Einsatz von Lösungsvermittlern läßt sich damit vermeiden und die Gefahr, daß der Entschäumer, z. B. unter ungünstigen Witterungsbedingungen, bei der Lagerung sich aus dem Additivpaket ausscheidet, verringern.

## Patentansprüche

1. Verwendung von organofunktionell modifizierten Polysiloxanen der allgemeinen Formel I 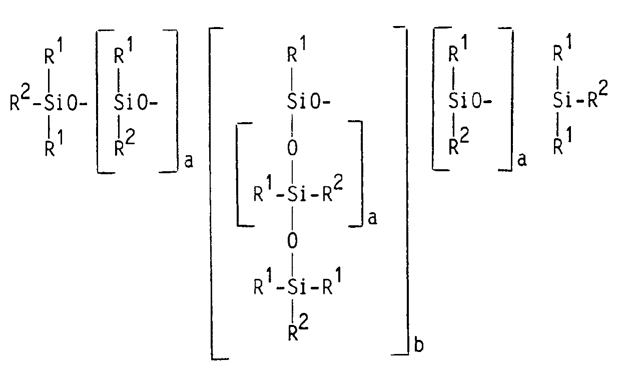 wobei die Reste
R¹ Alkylreste mit 1 bis 4 Kohlenstoffatomen oder Arylreste sind, jedoch mindestens 80 % der Reste R¹ Methylreste sind,
R² im Molekül gleich oder verschieden sind, von denen
30 bis 90 % die Bedeutung des Restes R¹ haben und
70 bis 10 % aus einem Gemisch von Resten R^{2A} und R^{2B} bestehen, wobei die Reste R^{2A} polarer als die Reste R^{2B} sind, und wobei die Reste R^{2A} aus folgenden Resten ausgewählt sind:
(a) der Rest 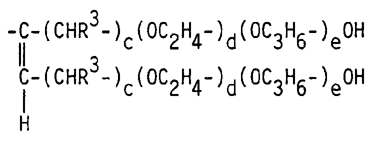 wobei
R³ ein Wasserstoff- oder Alkylrest,
c eine Zahl von 1 bis 20,
d eine Zahl von 0 bis 50,
e eine Zahl von 0 bis 50 ist oder
(b) der Rest -(CH₂-)_{fO}R⁴,
wobei
R⁴ ein Wasserstoff- oder ein einwertiger organischer Rest,
f eine Zahl von 3 bis 20 ist oder
(c) der Rest -(CH₂-)₉(OC₂H₄-)ₕ(OC₃H₆-);OR⁵
wobei
R⁵ ein Wasserstoff- oder ein einwertiger organischer Rest,
g eine Zahl von 3 bis 6,
h eine Zahl von 1 bis 50,
i eine Zahl von 0 bis 20 ist und
das Verhältnis h : i > 5 : 2 ist, und
die Reste R^{2B} aus folgenden Resten ausgewählt sind:
(d) der Rest 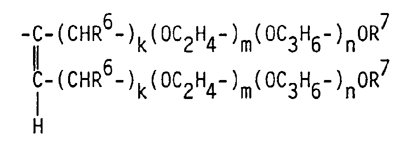 wobei
R⁶ ein Wasserstoff- oder Alkylrest,
R⁷ ein Alkyl-, Acyl- oder Trialkylsilylrest,
k eine Zahl von 1 bis 20,
m eine Zahl von 0 bis 50,
n eine Zahl von 0 bis 50 ist oder
(e) der Rest -(CH₂-)ₒCH₃,
wobei
o eine Zahl von 5 bis 30 ist, oder
(f) der Rest -(CH₂-)_{g}(OC₂H4-)ₕ(OC₃H₆-)ᵢOR⁵
wobei
R⁵ ein Wasserstoff- oder ein einwertiger organischer Rest,
g eine Zahl von 3 bis 6,
h eine Zahl von 0 bis 35,
i eine Zahl von 1 bis 50 ist und das Verhältnis h : i < 5 : 2 ist,
a eine Zahl von 1 bis 400,
b eine Zahl von 0 bis 10 ist,
zur Entschäumung von Dieselkraftstoff in Mengen von 0,5 bis 50 ppm, bezogen auf Dieselkraftstoff.

## Claims

1. The use of organofunctionally modified polysiloxanes of the general formula I 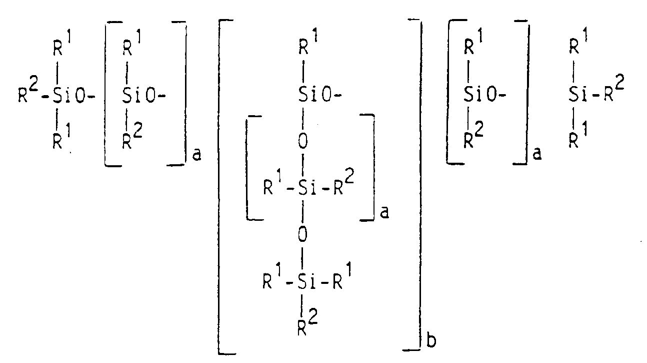 where the radicals
R¹ are alkyl radicals having from 1 to 4 carbon atoms or aryl radicals, but at least 80 % of the radicals R¹ are methyl radicals,
R² are identical or different in the molecule and of them
from 30 to 90 % are as defined for the radical R¹ and
from 70 to 10% consist of a mixture of radicals R^{2A} and R^{2B}, where the radicals R^{2A} are more polar than the radicals R^{2B} and where the radicals R^{2A} are selected from among the following radicals:
(a) the radical 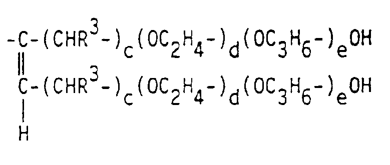 where
R³ is hydrogen or an alkyl radical,
c is a number from 1 to 20,
d is a number from 0 to 50,
e is a number from 0 to 50 or
(b) the radical -(CH₂-)_{f}OR⁴,
where
R⁴ is hydrogen or a monovalent organic radical, f is a number from 3 to 20 or
(c) the radical -(CH₂-)g(OC₂H₄-)ₕ(OC₃H₆);OR⁵
where
R⁵ is hydrogen or a monovalent organic radical,
g is a number from 3 to 6,
h is a number from 1 to 50,
i is a number from 0 to 20 and
the ratio h : i > 5 : 2, and
the radicals R^{2B} are selected from among the following radicals:
(d) the radical 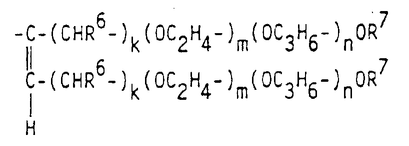 where
R⁶ is hydrogen or an alkyl radical,
R⁷ is an alkyl, acyl or trialkylsilyl radical,
k is a number from 1 to 20,
m is a number from 0 to 50,
n is a number from 0 to 50 or
(e) the radical -(CH₂-)oCH₃,
where
o is a number from 5 to 30, or
(f) the radical -(CH₂-)_{g}(OC₂H₄-)ₕ(OC₃H₆-)ᵢOR⁵ where
R⁵ is hydrogen or a monovalent organic radical,
g is a number from 3 to 6,
h is a number from 0 to 35,
i is a number from 1 to 50 and
the ratio h: i < 5 : 2,
a is a number from 1 to 400,
b is a number from 0 to 10,
for defoaming diesel fuel in amounts of from 0.5 to 50 ppm, based on diesel fuel.

## Revendications

1. Utilisation de polysiloxanes modifiés avec des composés organofonctionnels, répondant à la formule générale 1 : 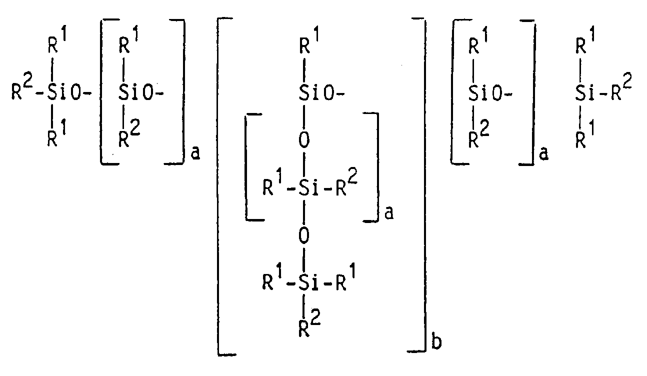 où les restes
R¹ sont des restes alkyles ayant de 1 à 4 atomes de carbone ou des restes aryles, au moins 80 % des restes R¹ signifiant toutefois le reste méthyle,
R² sont identiques ou différents dans la molécule, dont 30 à 90 % ont la signification du reste R¹ et 70 à 10 % sont formés d'un mélange de restes R^{2A} et de restes R^{2B}, les restes R^{2A} étant plus polaires que les restes R^{2B}, et les restes R^{2A} étant choisis parmi les restes suivants :
(a) le reste 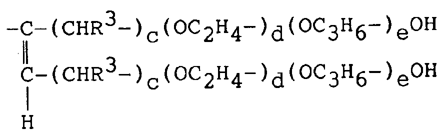 où
R³ est un reste d'hydrogène ou un reste alkyle,
c est un nombre de 1 à 20,
d est un nombre de 0 à 50,
e est un nombre de 0 à 50, ou
(b) le reste -(CH₂-)_{f}OR⁴,
où
R⁴ est un reste d'hydrogène ou un reste organique monovalent, f est un nombre de 3 à 20, ou
(c) le reste -(CH₂-)_{g}(OC₂H₄-)ₕ(OC₃H₆-);OR⁵
où
R⁵ est un reste d'hydrogène ou un reste organique monovalent,
g est un nombre de 3 à 6,
h est un nombre de 1 à 50,
i est un nombre de 0 à 20, et
le rapport h : i est > 5 : 2,
et les restes R^{2B} sont choisis parmi les restes suivants :
(d) le reste 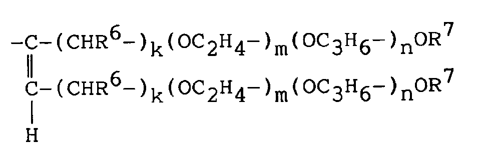 où
R⁶ est un reste d'hydrogène ou un reste alkyle,
R⁷ est un reste alkyle, acyle ou trialkylsilyle,
k est un nombre de 1 à 20,
m est un nombre de 0 à 50, ou
(e) le reste -(CH₂-)ₒCH₃,
où
o est un nombre de 5 à 30, ou
(f) le reste -(CH₂-)_{g}(OC₂H₄-)ₕ(OC₃H₆-);OR⁵
où
R⁵ est un reste d'hydrogène ou un reste organique monovalent,
g est un nombre de 3 à 6,
h est un nombre de 0 à 35,
i est un nombre de 1 à 50, et
le rapport h : i est < 5 : 2,
a est un nombre de 1 à 400,
b est un nombre de 0 à 10,
pour le traitement antimousse d'un carburant Diesel, en des quantités de 0,5 à 50 ppm par rapport au carburant Diesel.
